# EUROPEAN PATENT APPLICATION

(11) **EP 4 773 617 A1**
(43) Date of publication of application: **08.07.2026**
(21) Application number: 25305001.7
(22) Date of filing: 02.01.2025
(51) Int. Cl.: H04N 21/81

(54) **A COMPUTER-IMPLEMENTED METHOD FOR PREVIEWING A 3D SCENE VIDEO**

(71) Applicant: Dassault Systèmes, 78140 Vélizy-Villacoublay (FR)
(72) Inventor: MEYNIER, Vincent, 78140 Vélizy-Villacoublay (FR)
(74) Representative: Plasseraud IP

(57) **Abstract**

The invention relates to a method for previewing a 3D scene video having duration and frame rate comprising:
a) receiving (200) at least one set of rendering parameter values of the 3D scene video, each value being associated with a respective timestamp, a respective interpolation function being associated with each pair of values having consecutive timestamps;
b) determining (210) a number N of timecodes, where N is an integer based on the product of the duration and frame rate.

The method further comprises iteratively, in a non-linear rendering order that is not chronological for at least some of the N timecodes:
c) computing (250) a respective value for each set of rendering parameter values by using the interpolation function associated with the pair of values whose respective timestamps bound the current timecode, and
d) rendering (280) a frame based on each rendering parameter value determined in operation c).

## Description

The field of the invention relates to the preview of a 3D scene video.

In the field of 3D video rendering, generating high-quality frames of complex scenes is a crucial but time-consuming process. Rendering involves transforming 3D scenes into 2D images or frames that can be compiled into a final video output. This process is computationally intensive, particularly in pre-rendered video rendering, where physical laws such as lighting, shading and texturing must be computed with high precision. Pre-rendering engines, commonly used in industries like animation or product design, often take hours to generate a single frame due to the complexity of these computations. As a result, obtaining a timely preview of the animation becomes challenging, especially when frequent adjustments are needed.

Current methods for improving the efficiency of 3D scene video rendering offer only partial solutions. For instance, server farms allow parallel processing by distributing the workload across multiple machines, but they come with high operational costs and require careful management of scene and parameter distribution. Interpolation techniques, which reduce the number of frames needed for a preview, still require waiting until all frames have been sequentially rendered. Denoising methods used in ray tracing can speed up the process by terminating the rendering at a noisy intermediate stage and applying post-processing, but they too demand the generation of all frames before any preview can be visualized.

These methods present significant drawbacks, such as cost inefficiencies, suboptimal time management, and the inability to quickly visualize a preview of a scene. One of the main challenges in pre-rendered 3D scene video generation is the lengthy waiting period before an animation can be viewed. Often, the iterative nature of the rendering process - requiring repeated adjustments and full re-rendering - adds further delays; several back- and-forth adjustments between the 3D scene and the preview may be necessary to refine the 3D scene, and such iterations must be as quick as possible.

Existing solutions do not provide a broad overview of the 3D scene video, i.e. a preview that, although incomplete, gives a representative glimpse of the 3D scene video. The known methods only offer a preview once all frames have been rendered. Moreover, even if these known methods were adjusted to interrupt frame rendering and provide a preview with the frames already rendered, such a preview would yield only a truncated - and not broad - glimpse of the 3D scene video, as frames are rendered in chronological order.

Addressing these issues requires a more generalized approach that is not bound by the specific configurations of different engines, hardware, or software solutions but aims to reduce preview times while maintaining high-quality output.

The present invention seeks to improve the situation.

To this end, the Applicant proposes a computer-implemented method for previewing a 3D scene video having predetermined duration and frame rate. The computer-implemented method comprises the following operations:
a) receiving at least one set of rendering parameter values of the 3D scene video, each rendering parameter value being associated with a respective timestamp, two rendering parameter values having consecutive timestamps forming a pair of rendering parameter values to which a respective interpolation function is associated; and
b) determining a number N of timecodes, where N is an integer based on the product of the predetermined duration and frame rate, and associating a respective frame index with each of the N timecodes, with the increasing order of the frame indices matching the chronological order of the N timecodes.

The computer-implemented method further comprises iteratively, in a non-linear rendering order of the frame indices that is not increasing for at least some of the N timecodes:
c) computing a respective rendering parameter value for each set of rendering parameter values by using the interpolation function associated with the pair of rendering parameter values whose respective timestamps bound the timecode with which the current frame index is associated, and
d) rendering a frame, associated with the current frame index, based on each rendering parameter value computed in operation c).

According to one or more embodiments, the non-linear rendering order satisfies at least the following conditions:
(i) the first frame index for implementing operations c) and d) is the first one in the increasing order of the frame indices; and
(ii) the second frame index for implementing operations c) and d) is the last one in the increasing order of the frame indices.

Advantageously, the non-linear rendering order further satisfies the following condition:
(iii) the current frame index for implementing operations c) and d) is within a gap between two frame indices that are furthest apart from each other, between which no frame index is yet associated with a frame, and that are both already associated with a respective frame.

Typically, the non-linear rendering order further satisfies the following conditions:
(iv) if exactly two gaps are possible under condition (iii), the current frame index for implementing operations c) and d) is within the first possible gap in the increasing order of the frame indices;
(v) if exactly three gaps are possible under condition (iii), the current frame index for implementing operations c) and d) is within the second possible gap in the increasing order of the frame indices; and
(vi) if four or more gaps are possible under condition (iii), the current frame index for implementing operations c) and d) is within the possible gap immediately following either the first quarter or the second third of the four or more possible gaps in the increasing order of the frame indices.

According to one or more embodiments, the non-linear rendering order is such that a given frame index to which a frame is already associated is followed, if possible, by a frame index to which no frame is yet associated and associated with a timecode for which each rendering parameter value to be computed for a respective set of rendering parameter values is substantially equal to the corresponding rendering parameter value computed for the timecode associated with the given frame index.

According to one or more embodiments, operation a) includes receiving a set of rendering parameter values corresponding to a viewpoint-related parameter, and the non-linear rendering order is such that a given frame index to which a frame is already associated is followed, if possible, by a frame index to which no frame is yet associated and associated with a timecode for which each rendering parameter value to be computed for a respective set of rendering parameter values is substantially equal to the corresponding rendering parameter value computed for the timecode associated with the given frame index, except for the received set of rendering parameter values corresponding to the viewpoint-related parameter.

Alternatively, the non-linear rendering order is such that a given frame index to which a frame is already associated is followed by a frame index to which no frame is yet associated and associated with a timecode for which a distance between the respective rendering parameter value(s) to be computed for each set of rendering parameter values and the respective rendering parameter value(s) computed for each set of rendering parameter values for the given frame index is the largest.

According to one or more embodiments, operation a) further includes receiving a respective execution time for each interpolation function, operation b) includes computing a rendering time for each of the N timecodes based on the received execution times, and the non-linear rendering order is such that a frame index associated with a timecode is prioritized all the more for implementing operations c) and d) as the rendering time of the timecode is low.

According to one or more embodiments, the computer-implemented method further comprises a graphical operation including displaying a video preview player on a graphical user interface, and, upon receipt of a preview request through the graphical user interface, an operation e) of playing back, by the video preview player, the already rendered frames in the increasing order of the frame indices.

According to one or embodiments, the graphical operation includes displaying a timeline on the graphical user interface, and operation d) includes adding to the timeline a marker corresponding to the frame according to the increasing order of the frame indices and whose selection through the graphical user interface results in the display of the frame in the video preview player.

According to one or more embodiments, the graphical operation includes displaying thumbnails on the graphical user interface, and operation d) includes showing the frame in one of the thumbnails according to the increasing order of the frame indices and whose selection through the graphical user interface results in the display of the frame in the video preview player.

The Applicant also proposes a computer program comprising instructions for implementing the computer-implemented method described above when the instructions are executed by at least one processor.

The Applicant also proposes a computer-readable storage medium having stored thereon this computer program.

Finally, the Applicant proposes a device for previewing a 3D scene video having predetermined duration and frame rate. The device comprises:
- an input unit configured to receive at least one set of rendering parameter values of the 3D scene video, each rendering parameter value being associated with a respective timestamp, two rendering parameter values having consecutive timestamps forming a pair of rendering parameter values to which a respective interpolation function is associated;
- a preparation unit configured to determine a number N of timecodes, where N is an integer based on the product of the predetermined duration and frame rate received by the input unit, and to associate a respective frame index with each of the N timecodes, with the increasing order of the frame indices matching the chronological order of the N timecodes;
- a computing unit configured, upon receipt of a timecode, to compute a respective rendering parameter value for each set of rendering parameter values received by the input unit by using the interpolation function associated with the pair of rendering parameter values whose respective timestamps bound the received timecode;
- a rendering unit configured to render a frame based on each rendering parameter value computed by the computing unit; and
- a processor configured to determine a non-linear rendering order of the frame indices that is not increasing for at least some of the N timecodes, and to iteratively provide the computing unit with each of the N timecodes in the non-linear rendering order.

According to one or more embodiments, the device further comprises a display unit configured to display a video preview player on a graphical user interface, and, upon receipt of a preview request through the graphical user interface, to cause the video preview player to play back the already rendered frames in the increasing order of the frame indices.

Other features and advantages of the invention will become apparent from the following description provided for indicative and non-limiting purposes, with reference to the accompanying drawings, wherein:
- Figure 1 illustrates a device for previewing a 3D scene video according to the present invention,
- Figure 2 illustrates a method for previewing a 3D scene video according to the present invention,
- Figure 3 illustrates an intuitive window of a 3D scene video rendering software or application,
- Figure 4 illustrates a scripting window corresponding to the intuitive window of Figure 3,
- Figure 5 illustrates an animation window of a 3D scene video rendering software or application,
- Figure 6 illustrates a scripting window corresponding to the animation window of Figure 5,
- Figure 7 illustrates an example of a non-linear rendering order, and
- Figure 8 illustrates a graphical operation of the method of Figure 2.

The drawings and the following description are comprised for the most part of positive and well-defined features. As a result, they are not only useful in understanding the invention, but they can also be used to contribute to its definition, should the need arise.

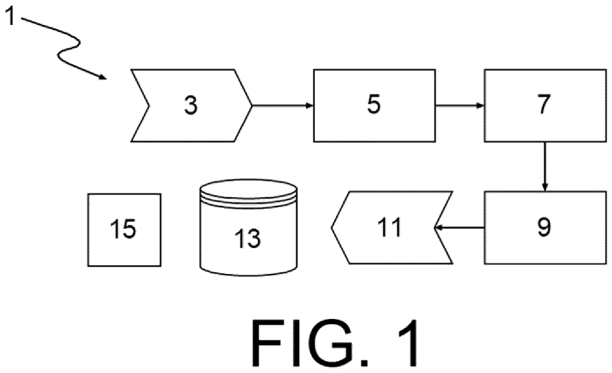

Figure 1 illustrates a device 1 for previewing a 3D scene video.

The device 1 enables a user to generate a 3D model or scene and configure one or more rendering parameters thereof.

A "rendering parameter" refers to any variable or setting that govern how a 3D model or scene is visually represented or animated.

The rendering parameters fall into two categories:
The first category gathers the *model* rendering parameters, which pertain to 3D models. The model rendering parameters include attributes such as position, size, and geometry. Some parameters enable transformations over time, allowing changes to a 3D model's structure or configuration. For example, a cube can morph into a sphere, or the number of objects can change, such as transitioning from four cubes to ten spheres.

The second category gathers the *scene* rendering parameters, which control the overall presentation of the 3D scene. The scene rendering parameters include settings such as lighting, shading, texturing and the point of view. These parameters affect how the 3D models are displayed within the broader 3D scene.

A 3D scene is a virtual space or environment containing one or more 3D models. The attributes of these 3D models depend on the model rendering parameters, while the presentation or exposure of the 3D models within the virtual environment depends on the scene rendering parameters.

The device 1 is configured to convert the 3D scene into a sequence of 2D images or frames based on the respective time evolution of the one or more rendering parameters.

By "configure a rendering parameter", it should be understood that the evolution of the rendering parameter over time is programmed, which may result in a controlled variation of a numerical value characterizing the rendering parameter. The resulting sequence of 2D images or frames represents the animation of the 3D scene, i.e. a 3D scene video.

The device 1 may be any computer device or system equipped with a human-machine interface (HMI) through which a user can access and utilize a 3D scene video rendering software or application. Such software or application may be native and thus accessible directly and locally on the device 1. Alternatively, such software or application may be accessible over a wide area network (WAN) such as the Internet or a private network such as an intranet.

The human-machine interface allows the user to design a 3D model, to generate a 3D scene comprising one or more 3D models, to configure one or more rendering parameters, and to view or preview a 3D scene video.

In the example of Figure 1, the device 1 comprises an input unit 3, a preparation unit 5, a computing unit 7, a rendering unit 9, a display unit 11, a memory 13 and a processing unit 15.

These elements of the device 1 are distinguished from each other on a functional basis, rather than on a structural one. In other words, from a hardware perspective, a single computer component may perform the respective functions of several of the elements of the device 1. Figure 1 should therefore be considered first and foremost as a functional block diagram.

Moreover, the functionalities of the device 1 are not necessarily limited to the preview of a 3D scene video. Figure 1 and the following description are nevertheless limited to this specific functionality, as it constitutes the core of the present invention.

The input unit 3 is configured to receive data related to a 3D model or scene and its rendering parameters. The received data are intended to be used for previewing a 3D scene video. The received data will eventually be used to generate the 3D scene video.

The input unit 3 is connected to the human-machine interface. The data are generated on the basis of the user's interactions with the human-machine interface, in particular during the design of the 3D model or the generation of the 3D scene, but may also depend on default configurations of the human-machine interface, or the software or application running it.

Specifically, the input unit 3 is arranged to receive at least a duration and a frame rate, along with one or more sets of rendering parameter values.

A set of rendering parameter values includes values each associated with a respective timestamp. The set of rendering parameter values is thus equivalent to a record of the discrete time evolution of the corresponding rendering parameter.

Furthermore, each set of rendering parameter values is accompanied by a set of interpolation functions. Each interpolation function is associated with a respective pair of rendering parameter values that have consecutive timestamps. The set of interpolation functions allows for the continuous extension of the discrete time evolution of the rendering parameter so that the value of the rendering parameter can be computed at each timestamp between the first and the last timestamps. Of course, a set of rendering parameter values may only include two values, in which case only one interpolation function is required.

The input unit 3 may also be configured to receive a respective execution time for each interpolation function.

It should be noted that the input unit 3 may receive either a single set of rendering parameter values or several sets of rendering parameter values.

In the following, and without loss of generality, it will be assumed that the input unit 3 receives several sets of rendering parameter values and several sets of interpolation functions.

The preparation unit 5 is configured to determine a number N of timecodes and to associate a frame index with each timecode.

The number N is an integer based on the product of the duration and the frame rate received by the input unit 3. Typically, the number N is equal to the product of the duration and frame rate or, if the result is not exactly an integer, the number N is taken as the floor or ceiling of such a product.

The frame indices are used to number the timecodes in an order corresponding to the chronological order. For example, the timecodes are numbered from 1 to N. The increasing order of the frame indices matches the chronological order of the N timecodes. In other words, the timecode whose frame index is 1 is the first one in chronological order, while the timecode whose frame index is N is the last one in chronological order.

The computing unit 7 is configured to receive a timecode and to return a rendering parameter value based on this timecode.

To do so, the computing unit 7 is configured to determine the pair of rendering parameter values whose respective timestamps bound the timecode, to compute a rendering parameter value using the interpolation function associated with this pair of rendering parameter values, and to return the computed rendering parameter value. In this way, the computing unit 7 takes advantage of the continuous extension of the set of rendering parameter values thanks to the associated set of interpolation functions.

Such a computed rendering parameter value can also be referred to as an "intermediate rendering parameter value" since it is computed using an interpolation function.

If the timecode exactly coincides with the timestamp of one of the rendering parameter values, the latter is returned by the computing unit 7 as the computed rendering parameter value.

As detailed below, the computing unit 7 is configured, upon receipt of a timecode, to compute a rendering parameter value for each set of rendering parameter values.

The rendering unit 9 is configured to receive a respective rendering parameter value for each set of rendering parameter values and to render a frame based on the received rendering parameter values.

As detailed below, the rendering unit 9 is configured to receive the rendering parameter values returned by the computing unit 7 for a timecode, and thus to render a frame corresponding to this timecode. Such a frame corresponds to a snapshot, at this timecode, of the animation of the 3D scene.

The display unit 11 is configured to display a graphical user interface (GUI) through which a 3D model can be designed, a 3D scene comprising one or more 3D models can be generated, one or more rendering parameters can be configured, and a 3D scene video can be viewed or previewed.

In particular, such a graphical user interface is capable of displaying a video preview player configured to playback frames. The user can, at any time, send a preview request through the graphical user interface to get a preview of the 3D scene video, i.e. the already rendered frames. In addition to the video preview player, the graphical user interface can display a timeline showing markers each corresponding to a respective already rendered frame and/or thumbnails each showing a respective already rendered frame.

Typically, this graphical user interface is displayed by the display unit 11 in response to launching the 3D scene video rendering software or application mentioned above.

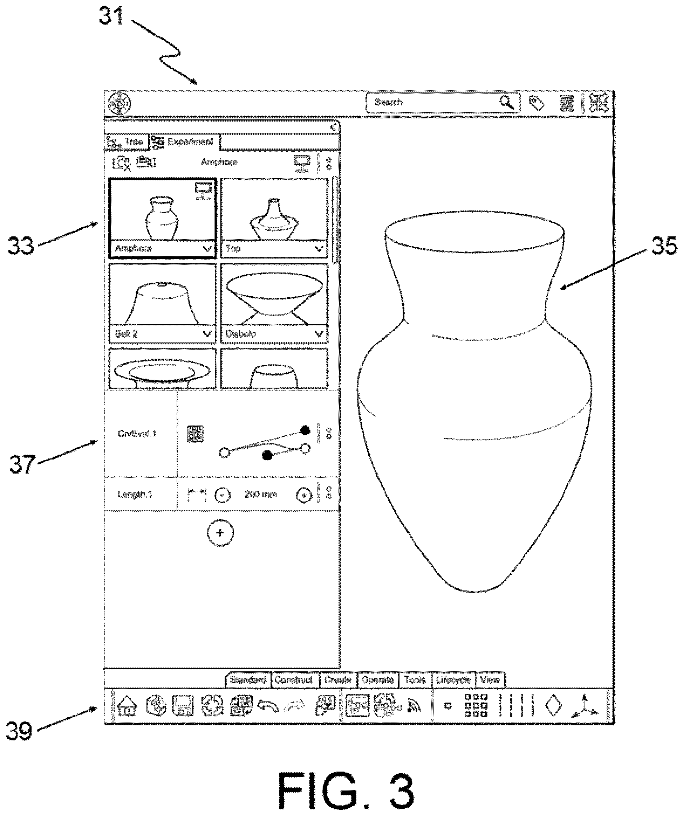

Figures 3-6 show windows of such a graphical user interface.

The display unit 11 can be considered as part of the human-machine interface. The display unit 11 is for instance a screen, sensitive or not. Furthermore, the human-machine interface may also include an input or haptic device that allows the user to interact with the display unit 11, specifically with the graphical user interface.

The input or haptic device is for instance a cursor control device, a pointing device, a keyboard or the like. A cursor control device allows the user to selectively position a cursor at any desired location on the graphical user interface. In addition, the cursor control device allows the user to select several commands. Typically, a cursor control device may be a computer mouse. Alternatively or additionally, the human-machine interface may comprise a touchpad, and/or a sensitive screen.

The memory 13 is configured to store a computer program including instructions whose execution, by the processing unit 15, causes the device 1 to implement the preview of 3D scene video.

The memory 13 can be any data storage medium arranged to receive and store digital data, for instance a hard disk, a semiconductor disk or more generally any computer component dedicated to the storage of data on flash memory. The memory 13 can also be a random access memory (RAM) or a magneto-optical disk. A combination of several types of data storage can also be envisaged.

The processing unit 15 is configured to execute the instructions stored in the memory 13 for the purpose of previewing a 3D scene video. To do this, the processing unit 15 is configured to control and coordinate the input unit 3, the preparation unit 5, the computing unit 7, the rendering unit 9, and the display unit 11.

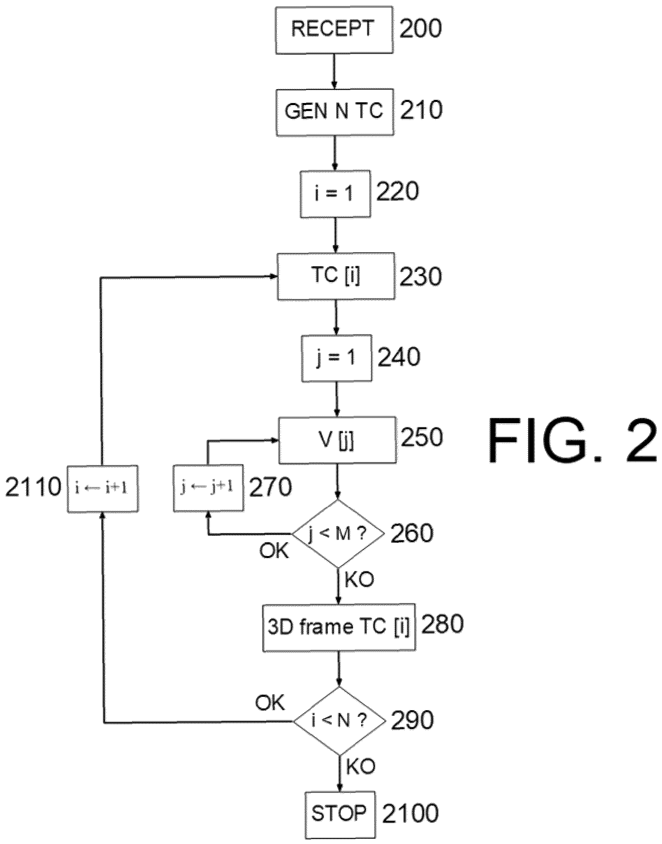

The details regarding the operation of the device 1 will be provided below with reference to Figure 2.

The processing unit 15 can be a microprocessor, a programmable logic device (PLD) or a dedicated chip of field programmable gate array (FPGA) or system on chip (SoC) type, a grid of computer resources, a microcontroller or any other specific form that has the necessary computing power to preview a 3D scene video. One or more of these elements can also be implemented in the form of specialized electronic circuits such as an application-specific integrated circuit (ASIC). A combination of processors and electronic circuits can also be envisaged.

A method for previewing a 3D scene video will now be described in the following with reference to Figure 2.

This method is implemented when the device 1 is used to generate and animate a 3D scene comprising one or more 3D models. To this end, the user launches a 3D scene video rendering software or application on the device 1 through the human-machine interface. As previously explained, the human-machine interface, and more particularly the display device 11, displays a graphical user interface, which allows the user to exploit the 3D scene video rendering software or application, i.e. to design the 3D model, to generate the 3D scene and to configure the rendering parameters thereof.

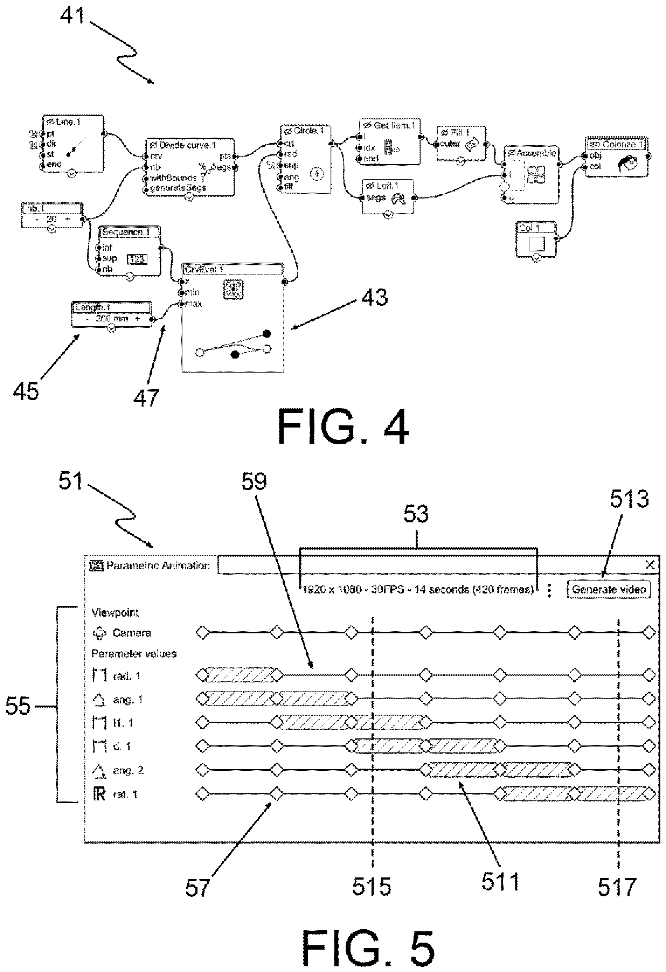

Figures 3 and 4 show examples of what the graphical user interface may display when the user launches the 3D scene video rendering software or application on the device 1. Specifically, Figures 3 and 4 represent windows providing the user with equivalent tools in order to interact with the 3D model or scene.

Figure 3 depicts an intuitive window 31 presenting multiple options for generating and animating a 3D scene comprising one or more 3D models. The intuitive window 31 is accessed via the "Experiment" tab.

A selection option 33 allows a 3D model to be selected from a library of 3D models. In the example of Figure 3, the user has selected a 3D model - an "amphora" - from various 3D models, such as a spinning top, a bell, or a diabolo. Such a library may include both pre-existing 3D models and/or 3D models created and saved by the user. The selected 3D model 35 is displayed on the graphical user interface.

The 3D model 35 and its animation both depend on a plurality of rendering parameters.

A rendering parameter option 37 allows one or more rendering parameters to be configured.

In the example of Figure 3, the user has access to an operation labeled "CrvEva1.1" and a controller labeled "Length.1". The operation "CrvEval. 1" evaluates a curve within a range defined by lower and upper bounds, "min" and "max", and provides outputs such as the radius of curvature at a given point. The controller "Length. 1" corresponds to the total length of the curve, allowing the user to set the upper bound "max". In this case, the user has specified a length of 200 millimeters (mm) for the controller "Length.1". The controller "Length. 1" is a rendering parameter, specifically a model rendering parameter.

The intuitive window 31 may present other options, including options to set or adjust other rendering parameters, as well as classic tools in a 3D scene video rendering software or application. In the example of Figure 3, the intuitive window 31 presents a toolbar 39. The toolbar 39 includes graphical icons each corresponding to a respective function, such as a function for saving the animation of the 3D model, as well as undo and redo functions. A given function can be activated by selecting the corresponding graphical icon, for example by positioning a cursor over the icon and clicking on it using the input or haptic device mentioned above.

Figure 4 depicts a scripting window 41 displaying the rendering parameters of the 3D model 35 of Figure 3 and showing how they are interconnected. The scripting window 41 is accessed via the "Tree" tab in Figure 3.

The scripting window 41 provides a node-based system for managing the generation and animation of a 3D scene comprising one or more 3D models. The node-based system comprises interconnected nodes representing either controllers or operations. The controllers correspond to rendering parameters, such as model or scene rendering parameters, and serve as inputs for operations. The operations are functional units that transform inputs into outputs based on defined mathematical or logical processes.

In the example of Figure 4, the scripting window 41 relates to the above-mentioned 3D model 35 of Figure 3. Consequently, the controllers refer to model rendering parameters, which corresponds to boxes labeled "nb.1", "Col.1", "Length.1", and so on. The operations correspond to boxes labeled "Divide curve.1", "Sequence.1", "Circle.1", "Colorize. 1", "CrvEval.1", and so on.

The nodes have input and/or output ports, enabling them to be connected to one another via connections. In particular, the controller nodes each have an output port linked to the input port of an operation node, and each operation node can have an output port linked to the input port of another operation node. This interconnected structure allows the user to create complex animation workflows, defining how rendering parameters influence the behavior and appearance of the 3D model or scene.

In the example of Figure 4, the operation node corresponding to a box 43 labeled "CrvEval.1" has an input port "max" connected to the output port of the controller node corresponding to a box 45 labeled "Length.1" via a link 47.

The scripting window 41 allows one or more rendering parameters to be configured while providing a global view of how they interact with each other through operations. The scripting window 41 is equivalent of the intuitive window 31.

The node-based system, or graph, within the scripting window 41 can be directly executed to generate the 3D scene video.

Referring again to Figure 2, the input unit 3 receives, in an operation 200, a duration and a frame rate. The duration and the frame rate can be entered by the user, for example, through the graphical user interface.

The input unit 3 further receives one or more sets of rendering parameter values, along with one or more sets of interpolation functions. Each set of rendering parameter values corresponds to a respective rendering parameter and is associated with a respective set of interpolation functions. Furthermore, each rendering parameter value is associated with a respective timestamp.

Moreover, for any given set of rendering parameter values, each interpolation function within the associated set of interpolation functions is associated with a respective pair of rendering parameter values from the given set of rendering parameter values, and more particularly a respective pair of rendering parameter values that have consecutive timestamps.

In the operation 200, the input unit 3 may also receive a respective execution time for each interpolation function.

In the following, and without loss of generality, it will be assumed that the input unit 3 receives several sets of rendering parameter values, and the same number of sets of interpolation functions accordingly. The timestamps are identical from one set of rendering parameter values to another.

In an operation 210, the preparation unit 5 determines a number N of timecodes and associates a frame index with each timecode. Indeed, one frame must be rendered for each timecode.

As explained above, the number N is typically equal to the product of the duration and frame rate, and the frame indices numbers the timecodes according to the chronological order. The increasing order of the frame indices matches the chronological order of the N timecodes.

Figure 5 shows an example of what the graphical user interface may display when the user launches the preview of a 3D scene video. More specifically, Figure 5 displays an animation window 51 that summarizes the rendering parameters of the 3D model and other data related to the 3D scene video to be previewed.

It should be noted that Figure 5 does not correspond to the 3D model of Figures 3 and 4.

An area 53 provides information on the 3D scene video, including the resolution "1920 x 1080" the frame rate "30 FPS" and the duration "14 seconds". The area 53 also indicates the number of frames to be rendered, "420 frames", which corresponds to the number N of timecodes. The number N is equal to 420, which is the product of the duration - 14 seconds - and the frame rate - 30 frames per second (FPS).

An area 55 lists the rendering parameters of the 3D model or scene. This list includes a viewpoint-related parameter, namely the camera angle. Such a viewpoint-related parameter is a scene rendering parameter.

Next to each rendering parameter is a sequence of diamonds corresponding to the set of rendering parameter values. Each diamond corresponds to a value - and therefore to the corresponding timestamp too. The chronological order is from left to right. For instance, the second value in chronological order for the rendering parameter "rat. 1" is represented by a diamond 57.

Two consecutive diamonds, which correspond to rendering parameter values having consecutive timestamps, are connected to each other either by a solid line or a hatched area.

A solid line indicates that the interpolation function associated with the pair of rendering parameter values represented by the two consecutive diamonds connected by the solid line is a constant function. Consequently, the value of the rendering parameter remains unchanged between the two diamonds, i.e. from one timestamp to the next. For instance, the second and third diamonds, representing the second and third values chronologically, for the rendering parameter "rad.1" are connected by a solid line 59. Additionally, it can be noted that the camera angle remains identical throughout the 3D scene video.

A hatched area indicates that the interpolation function associated with the pair of rendering parameter values represented by the two consecutive diamonds connected by the hatched area is a non-constant function. Consequently, the value of the rendering parameter varies between the two consecutive diamonds, i.e. between the two timestamps. For instance, the fourth and fifth diamonds, representing the fourth and fifth values chronologically, for the rendering parameter "ang.2" are connected by a hatched area 511.

The animation window 51 also includes a button 513 which causes the frames to be rendered when the user clicks on it.

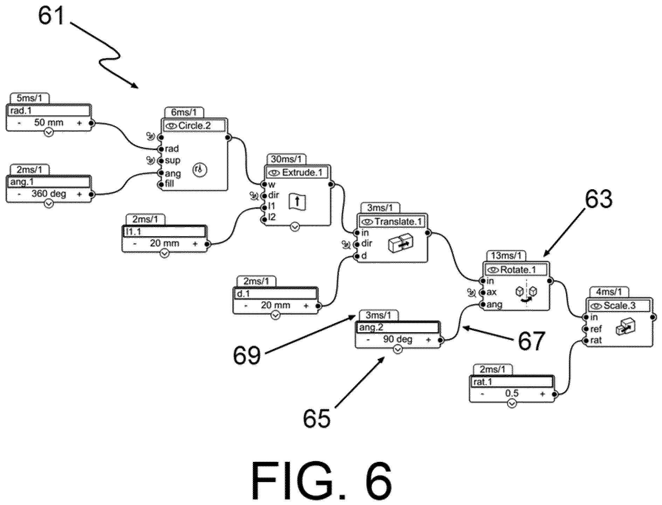

Figure 6 shows a scripting window 61 displaying the rendering parameters listed in the animation window 51 of Figure 5 and how they are interconnected.

Figure 6 is similar to Figure 4, except that the underlying 3D model or scene and rendering parameters are different. The principle remains the same: the scripting window 61 contains boxes related to controllers, including "rad.1", "ang.1", "I1.1", "d.1", "ang.2" and "rat.1", as well as boxes related to operations, including "Circle.2", "Extrude.1", "Translate.1", "Rotate.1" and "Scale.3". As indicated above, the controllers correspond to the rendering parameters.

In particular, the operation "Rotate.1" is represented by a box 63, with one of its inputs, "ang", connected to the controller "ang.2" represented by a box 65. The dependency of the operation "Rotate.1" on the controller "ang.2" is represented by a link 67. The boxes 63 and 65 connected by the link 67 represent together a 90° rotation of the 3D model.

As shown in Figure 5, such a rotation is achieved from the fourth to the sixth frame since, next to the rendering parameter "ang.2", the sequence of diamonds is such that all consecutive diamonds are connected by a solid line, except for the fourth and fifth diamonds which are connected by the hatched area 511 corresponding to a non-constant interpolation function, and for the fifth and sixth diamonds which are also connected by a hatched area corresponding to another non-constant interpolation function.

Referring again to Figure 2, the processor 15 determines, in an operation 220, a *non-linear rendering order* of the frame indices.

The non-linear rendering order of the frame indices is the order in which the frames are to be rendered to quickly preview the 3D scene video. The non-linear rendering order of the frame indices proposed by the present invention is special in that it is not increasing for at least some of the N timecodes. In other words, the frames are not rendered in chronological order, as at least one frame is rendered after a frame having a later timecode.

The determination of the non-linear rendering order results in assigning a rank to each timecode. The ranks of the timecodes determine their rendering order, i.e. the order in which the frames respectively associated with the timecodes are rendered.

The operation 220 corresponds to the preparation of an iterative loop where each iteration ends with the rendering of a frame. Therefore, the total number of iterations is equal to N, which is the number of timecodes - and thus the number of frames to be rendered. The successive iterations are performed so as to satisfy the non-linear rendering order.

To this end, the processor 15 generates, in the operation 220, a bijection TC[] which receives a local variable i as input and returns a frame index TC[i] as output. The local variable i and the frame index TC[i] are both integers ranging from 1 to N. The local variable i characterizes each iteration of the iterative loop and is incremented at the end of each frame rendering until all timecodes have been subject to frame rendering. Consequently, the timecode associated with the frame index TC[i] is the i-th timecode for which a frame is rendered, and the sequence TC[i] is the non-linear rendering order.

When a timecode has been subject to frame rendering, i.e. the frame to be rendered for this timecode at the end of the dedicated iteration has actually been rendered, the rendered frame is said to be "associated" with the frame index that is associated with the timecode. The timecode and the frame are thus associated via the frame index.

In the operation 220, the processor 15 initializes the local variable i: *i* = 1.

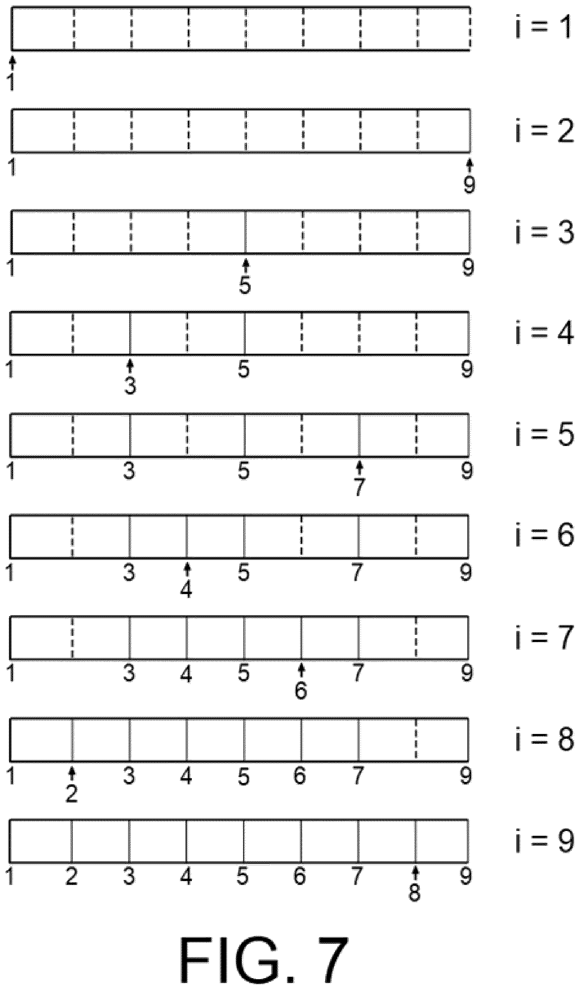

Figure 7 illustrates an example of a non-linear rendering order. In this example, the number of timecodes, and thus the number of frames to render, is equal to nine, i.e. *N =* 9. Consequently, nine iterations are required to render each of the frames. Additionally, to meet the constraint according to which the non-linear rendering order is not increasing for at least some of the nine timecodes, the following conditions are applied cumulatively:
(i) the first frame index is the first one in the increasing order of the frame indices;
(ii) the second frame index is the last one in the increasing order of the frame indices;
(iii) the next frame index in the non-linear rendering order is in the middle of a gap between two frame indices : (1) that are furthest apart - i.e. the more distant - from each other, (2) between which no frame index is yet associated with a rendered frame, and (3) that are both already associated with a respective rendered frame;
(iv) if exactly two gaps are possible under condition (iii), the next frame index in the non-linear rendering order is in the middle of the first possible gap in the increasing order of the frame indices;
(v) if exactly three gaps are possible under condition (iii), the next frame index in the non-linear rendering order is in the middle of the second possible gap in the increasing order of the frame indices; and
(vi) if four or more gaps are possible under condition (iii), the next frame index in the non-linear rendering order is in the middle of the possible gap immediately following either the first quarter or the second third of the four or more possible gaps in the increasing order of the frame indices.

In the formulation of conditions (i)-(vi) above, it is equivalent to refer to "frame index" or "timecode" since each frame index is associated with a respective timecode, and the increasing order of the frame indices matches the chronological order of timecodes.

Moreover, conditions (i)-(vi) can be modified. For instance, condition (i) may stipulate that the first frame index is the last one in the increasing order of the frame indices, and condition (ii) may stipulate that the second frame index is the first one in the increasing order of the frame indices. Furthermore, as detailed below, the wording "in the middle of" in conditions (iii)-(vi) fits perfectly in the example of Figure 7 since N = 9, but conditions (iii)-(vi) can be made more general by replacing the expression "in the middle of" with "within."

Figure 7 is organized as follows: for each iteration, from *i* = 1 to *i* = 9, a box representing the 3D scene video indicates the progress of the rendering of the 3D scene video.

Specifically, each box next to an iteration presents nine vertical lines, each corresponding to a respective timecode. The vertical lines are arranged from left to right within the box in chronological order. A solid vertical line indicates that the frame of the corresponding timecode is or has already been rendered. Conversely, a dashed vertical line indicates that the frame of the corresponding timecode has not yet been rendered.

Furthermore, at each iteration, each timecode whose associated frame index is shown is a timecode for which a frame either has already been rendered in a preceding iteration or is rendered at the end of the current iteration. An arrow indicates the timecode for which a frame is rendered at the end of the current iteration.

Figure 7 is analysed below, iteration by iteration.

Regarding the iteration *i* = 1, condition (i) applies: the first frame index in the non-linear rendering order is the first one in the increasing order of the frame indices, i.e. the frame index associated with the first timecode in chronological order. In other words, TC[1] = 1. Consequently, only the vertical line corresponding to the timecode associated with the frame index 1 is solid, and an arrow points to this vertical line. All the other vertical lines are dashed since no other frame has been rendered.

Regarding the iteration *i* = 2, condition (ii) applies: the second frame index in the non-linear rendering order is the last one in the increasing order of the frame indices, i.e. the frame index associated with the last timecode in chronological order. In other words, TC[2] = *N* = 9. Consequently, the vertical lines corresponding to the timecodes associated with the frame indices 1 and 9 are solid, and an arrow points to the vertical line corresponding to the timecode associated with the frame index 9.

Regarding the iteration *i* = 3, condition (iii) applies: the third frame index in the non-linear rendering order is the frame index associated with the timecode in the middle of the gap between the two timecodes that are furthest apart from each other, between which no timecode is yet associated with a frame, and that are both associated with a respective frame. These two timecodes are the ones associated with the frame indices 1 and 9.

Indeed, none of the timecodes associated with a frame index between 2 and 8 is yet associated with a frame, whereas the timecodes associated with the frame indices 1 and 9 are already associated with a respective frame. The timecode in the middle of the gap between the timecodes associated with the frame indices 1 and 9 is the one associated with the frame index 5. In other words, TC [3] = 5.

Regarding the iteration *i* = 4, two gaps are possible under condition (iii): the gap between the timecodes associated with the frame indices 1 and 5, and the gap between the timecodes associated with the frame indices 5 and 9. Therefore, condition (iv) applies: the fourth frame index in the non-linear rendering order is the frame index associated with the timecode in the middle of the first possible gap in the increasing order of the frame indices. The timecode in the middle of the gap between the timecodes associated with the frame indices 1 and 5 is the one associated with the frame index 3. In other words, TC[4] = 3.

Regarding the iteration *i* = 5, condition (iii) applies: the fifth frame index in the non-linear rendering order is the frame index associated with the timecode in the middle of the gap between the two timecodes that are the furthest apart from each other, between which no timecode is yet associated with a frame, and that are both associated with a respective frame. These two timecodes are the ones associated with the frame indices 5 and 9. Indeed, none of the timecodes associated with a frame index between 6 and 8 is yet associated with a frame, whereas the timecodes associated with the frame indices 5 and 9 are already associated with a respective frame. The timecode in the middle of the gap between the timecodes associated with the frame indices 5 and 9 is the one associated with the frame index 7. In other words, TC [5] = 7.

Regarding the iteration *i* = 6, four gaps are possible under condition iii): the gap between the timecodes associated with the frame indices 1 and 3, the gap between the timecodes associated with the frame indices 3 and 5, the gap between the timecodes associated with the frame indices 5 and 7, and the gap between the timecodes associated with the frame indices 7 and 9. Therefore, condition (vi) applies: the sixth frame index in the non-linear rendering order is the frame index associated with the timecode in the middle of the possible gap immediately following either the first quarter or the second third of the four gaps in the increasing order of the frame indices. Here, the first option is chosen. The first quarter of the four gaps is the one between the timecodes associated with the frame indices 1 and 3; and this gap is followed by the gap between the timecodes associated with the frame indices 3 and 5. The timecode in the middle of the gap between the timecodes associated with the frame indices 3 and 5 is the one associated with the frame index 4. In other words, TC [6] = 4.

Regarding the iteration *i* = 7, three gaps are possible under condition (iii): the gap between the timecodes associated with the frame indices 1 and 3, the gap between the timecodes associated with the frame indices 5 and 7, and the gap between the timecodes associated with the frame indices 7 and 9. Therefore, condition (v) applies: the seventh frame index in the non-linear rendering order is the frame index associated with the timecode in the middle of the second possible gap in the increasing order of the frame indices. The timecode in the middle of the gap between the timecodes associated with the frame indices 5 and 7 is the one associated with the frame index 6. In other words, TC[7] = 6.

Regarding the iteration *i* = 8, two gaps are possible under condition (iii): the gap between the timecodes associated with the frame indices 1 and 3, and the gap between the timecodes associated with the frame indices 7 and 9. Therefore, condition (iv) applies: the eighth frame index in the non-linear rendering order is the frame index associated with the timecode in the middle of the first possible gap in the increasing order of the frame indices. The timecode in the middle of the gap between the timecodes associated with the frame indices 1 and 3 is the one associated with the frame index 2. In other words, TC[8] = 2.

Finally, regarding the iteration *i* = 9, condition (iii) applies: the ninth frame index in the non-linear rendering order is the frame index associated with the timecode in the middle of the gap between the two timecodes that are the furthest apart, between which no timecode is yet associated with a frame, and that are both associated with a respective frame. These two timecodes are the ones associated with the frame indices 7 and 9. Indeed, the timecode associated with the frame index 8 is not yet associated with a frame, whereas the timecodes associated with the frame indices 7 and 9 are already associated with a respective frame. The timecode in the middle of the gap between the timecodes associated with the frame indices 7 and 9 is the one associated with the frame index 8. In other words, TC[9] = 8.

Thus, in the example shown in Figure 7, the processor 15 determines, during the operation 220, the following non-linear rendering order of the frame indices: 1- 9 - 5 - 3 - 7 - 4-6-2-8.

In this example, it clearly appears that the non-linear rendering order of the frame indices is not increasing - and thus not chronological - for at least some of the nine timecodes. For instance, the frame index 5 appears after frame index 9, the frame index 6 appears after frame index 7, the frame index 2 appears after frame index 3, and so on. It should be noted that, after the first three frame indices in the non-linear rendering order, the first, last, and median timecodes are already each associated with a respective frame. Consequently, a preview based only on these first three frame indices already provides a broad overview, as the user gains insight into the beginning, middle, and end of the 3D scene video.

Other conditions or criteria than the conditions (i)-(vi) listed above may be applied.

For instance, a given frame index to which a frame is already associated is followed, if possible, by a frame index to which no frame is yet associated and associated with a timecode for which each rendering parameter value to be computed for a respective set of rendering parameter values is substantially equal to the rendering parameter value computed for the same rendering parameter for the timecode associated with the given frame index.

In other words, the upstream detection by pre-processing of two timecodes for which the rendering parameter values to be computed are the same from one timecode to the other can be used to adjust the non-linear rendering order. More particularly, the non-linear rendering order is modified so that the two frame indices associated with these two timecodes respectively follow one another in the non-linear rendering order.

By "substantially", it is meant here that the rendering parameter values are theoretically identical, but in practice, the rendering parameter values may be slightly different, typically by 5%, due to the inherent imprecision of any computation.

To achieve this, each computed rendering parameter value is stored in the memory 13 and can be retrieved and directly reused in the next iteration of the iterative loop. Such an implementation helps save computational resources and quickly render a large number of frames in which the 3D scene does not changes from one to another.

This principle can be adapted to disregard any viewpoint-related parameters. Indeed, in a 3D scene video, the 3D model might not change, but the viewpoint, such as the camera angle, may vary. In other words, the upstream detection by pre-processing of two timecodes for which the rendering parameter values to be computed are the same, except for the viewpoint-related parameters, from one timecode to the other can be used to adjust the non-linear rendering order. More particularly, the non-linear rendering order is modified so that the two frame indices associated with these two timecodes respectively follow one another in the non-linear rendering order.

It may also be of interest to take the opposite approach and prioritize, in the non-linear rendering order, a frame index associated with a timecode for which the rendering parameter values to be computed are very different, and even the most distant, from those of the timecode with which the preceding frame index is associated.

The memory 13 may be configured to store a vector of the rendering parameter values computed for each frame index, and more precisely for each associated timecode. The processor 15 then selects the next frame index, according to the non-linear rendering order, whose vector of rendering parameter values to be computed is such that the distance between the two vectors of rendering parameter values is the largest. The distance is for instance the Euclidean distance or the cosine distance.

This approach provides a representative preview of the 3D scene by showing the most significant changes, like the key moments of a movie.

It is also possible to exploit an expected rendering time of each frame.

As mentioned above, the input unit 3 may receive, in the operation 200, a respective execution time for each interpolation function.

As showed in Figure 6, each box is topped with execution time information which makes it possible, for each controller or for each operation, to estimate the corresponding execution time. For instance, the execution time information 69 at the top of the box 65 corresponding to the controller "ang.2" indicates an execution time equal to 3 milliseconds (ms) to reach the desired final value of 90°.

In this case, in the operation 220, the processor 15 computes the rendering time of the respective frame to which each frame index, and thus each timecode, is to be associated, based on the respective execution times of the interpolation functions involved in computing the corresponding rendering parameter values.

In an operation 230, the processor 15 determines the timecode for which a frame is to be rendered. To do this, the processor 15 applies the bijection TC[] to the current value of the local variable i. The processor 15 provides the computing unit 7 with the timecode associated with the frame index TC[i].

The computing unit 7 is configured to compute a respective value for each rendering parameter. It is assumed hereinafter that the 3D scene is defined by M rendering parameters, and thus that the input unit 3 has received, in the operation 200, M sets of rendering parameter values.

The processor 15 associates a respective integer between 1 and M to each set of rendering parameter values. Furthermore, the processor 15 initializes, in an operation 240, a local variable j: *j* = 1.

The local variable j is intended to iterate, in increasing order, through all integers between 1 and M.

In an operation 250, the computing unit 7 determines the interpolation function associated with the pair of values from the j-th set of rendering parameter values that bound the timecode associated with the frame index T[i]. The computing unit 7 then applies this interpolation function to the timecode to obtain the value V[j].

Reference is made again to Figure 5. The reference signs "515" and "517" - and the corresponding dashed lines - each indicate a respective timecode.

The timecode 515 is bounded by the pair of the third and fourth timestamps. Therefore, to compute the value of the rendering parameter "d.1", the interpolation function represented by the hatched area crossed by the dashed line is applied to the timecode 515.

The timecode 517 is bounded by the pair of the sixth and seventh timestamps. Therefore, to compute the value of the rendering parameter "rat.1", the interpolation function represented by the hatched area crossed by the dashed line is applied to the timecode 517.

It should be noted that the value of the rendering parameter "rad.1" is the same for the timecodes 515 and 517.

In an operation 260, the processor 15 determines whether the computing unit 7 has computed a value V[j] for each of the M sets of rendering parameter values. To this end, the current value of the local variable j is compared to M.

If this is not the case, the local variable j is incremented in an operation 270, and the operation 250 is performed again for the new value of the local variable j.

Otherwise, the rendering unit 9 receives, in an operation 280, the M rendering parameter values V[j] computed by the computing unit 7 for the timecode associated with the current frame index TC[i].

The rendering unit 9 renders a frame based on the M received rendering parameter values V[j]. The rendered frame is associated with the current frame index T[i].

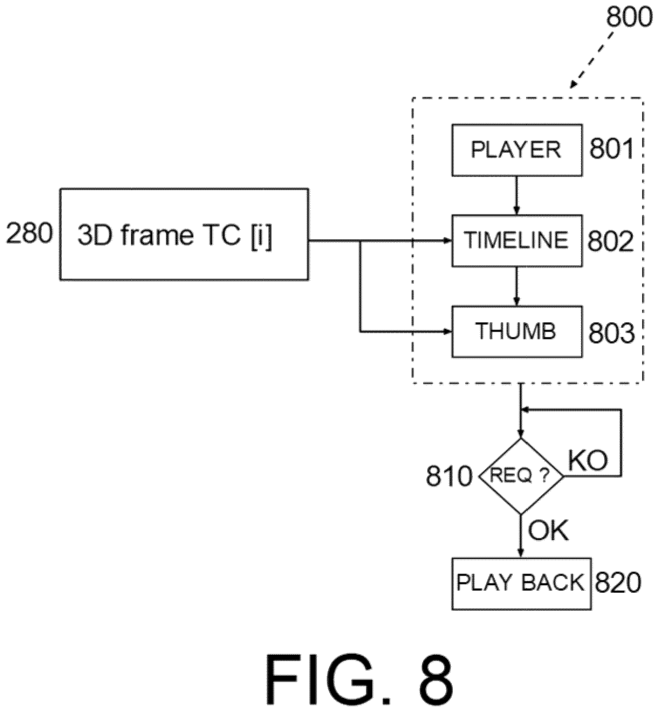

Figure 8 illustrates how this operation 280 is reflected in the graphical user interface.

Figure 8 shows a graphical operation 800 performed by the display unit 11 and which results in the display of information related to the 3D scene video preview on the graphical user interface. The operation 800 includes three sub-operations 801, 802, and 803.

First of all, in the sub-operation 801, the display unit 11 displays a video preview player on the graphical user interface.

In the sub-operation 802, the display unit 11 displays a timeline on the graphical user interface, for instance below the video preview player.

Furthermore, upon rendering the frame associated with the current frame index T[i], the display unit 11 adds to the timeline a marker corresponding to this frame according to the increasing order of the frame indices.

The graphical user interface allows the user to select a marker to display the corresponding frame in the video preview player.

In the sub-operation 803, the display unit 11 displays thumbnails on the graphical user interface, for instance below the video preview player.

Furthermore, upon rendering the frame associated with the current frame index T[i], the display unit 11 shows this frame in one of the thumbnails according to the increasing order of the frame indices.

The graphical user interface allows the user to select a thumbnail to display the corresponding frame in the video preview player.

As previously explained, the human-machine interface, and more specifically the graphical user interface, may be used at any time to preview the 3D scene video. This option typically appears as a button to be clicked. By "at any time", it is meant that this preview can take place before all the frames have been rendered.

Thus, still referring to Figure 8, the input unit 3 determines, in an operation 810, whether a preview request has been received through the graphical user interface.

If such a preview request is received, the operation 810 is followed by an operation 820 in which the display unit 11 controls the video preview player to play back, in the increasing order of frame indices, the frames that have already been rendered.

Although the frames have not been rendered in the increasing order of the frame indices, the playback follows the increasing order of the frame indices in order to maintain the chronological order of the frames so that the preview remains as faithful as possible to the 3D scene video.

Otherwise, the input unit 3 continues to monitor for the reception of a possible preview request.

Figure 2 is referred to again hereinafter.

In an operation 290, the processor 15 determines whether all frames have been rendered, i.e. whether each of the N timecodes is associated with a respective frame. To this end, the current value of the local variable i is compared to N.

If so, the method for previewing a 3D scene video ends in an operation 2100. It is still possible to send a preview request through the graphical user interface, which results in the video preview player playing back the N frames in the increasing order of the frame indices.

Otherwise, i.e. when there is at least one timecode for which no frame has yet been rendered, the iterative loop continues, the local variable i is incremented in an operation 2110, and the operation 230 is performed again for the new value of the local variable i.

## Claims

1. A computer-implemented method for previewing a 3D scene video having predetermined duration and frame rate comprising the following operations:
a) receiving (200) at least one set of rendering parameter values of said 3D scene video, each rendering parameter value being associated with a respective timestamp, two rendering parameter values having consecutive timestamps forming a pair of rendering parameter values to which a respective interpolation function is associated;
b) determining (210) a number N of timecodes, where N is an integer based on the product of the predetermined duration and frame rate, and associating a respective frame index with each of the N timecodes, with the increasing order of the frame indices matching the chronological order of the N timecodes;
the computer-implemented method further comprising iteratively, in a non-linear rendering order of the frame indices that is not increasing for at least some of the N timecodes:
c) computing (250) a respective rendering parameter value for each set of rendering parameter values by using the interpolation function associated with the pair of rendering parameter values whose respective timestamps bound the timecode with which the current frame index is associated, and
d) rendering (280) a frame, associated with said current frame index, based on each rendering parameter value computed in operation c).

2. The computer-implemented method according to claim 1, wherein the non-linear rendering order satisfies at least the following conditions:
(i) the first frame index for implementing operations c) and d) is the first one in the increasing order of the frame indices; and
(ii) the second frame index for implementing operations c) and d) is the last one in the increasing order of the frame indices.

3. The computer-implemented method according to claim 2, wherein the non-linear rendering order further satisfies the following condition:
(iii) the current frame index for implementing operations c) and d) is within a gap between two frame indices that are furthest apart from each other, between which no frame index is yet associated with a frame, and that are both already associated with a respective frame.

4. The computer-implemented method according to claim 3, wherein the non-linear rendering order further satisfies the following conditions:
(iv) if exactly two gaps are possible under condition (iii), the current frame index for implementing operations c) and d) is within the first possible gap in the increasing order of the frame indices;
(v) if exactly three gaps are possible under condition (iii), the current frame index for implementing operations c) and d) is within the second possible gap in the increasing order of the frame indices; and
(vi) if four or more gaps are possible under condition (iii), the current frame index for implementing operations c) and d) is within the possible gap immediately following either the first quarter or the second third of said four or more possible gaps in the increasing order of the frame indices.

5. The computer-implemented method according to one of the preceding claims, wherein the non-linear rendering order is such that a given frame index to which a frame is already associated is followed, if possible, by a frame index to which no frame is yet associated and associated with a timecode for which each rendering parameter value to be computed for a respective set of rendering parameter values is substantially equal to the corresponding rendering parameter value computed for the timecode associated with said given frame index.

6. The computer-implemented method according to one of the preceding claims, wherein operation a) includes receiving (200) a set of rendering parameter values corresponding to a viewpoint-related parameter, and wherein the non-linear rendering order is such that a given frame index to which a frame is already associated is followed, if possible, by a frame index to which no frame is yet associated and associated with a timecode for which each rendering parameter value to be computed for a respective set of rendering parameter values is substantially equal to the corresponding rendering parameter value computed for the timecode associated with said given frame index, except for the received set of rendering parameter values corresponding to the viewpoint-related parameter.

7. The computer-implemented method according to one of claims 1 to 4, wherein the non-linear rendering order is such that a given frame index to which a frame is already associated is followed by a frame index to which no frame is yet associated and associated with a timecode for which a distance between the respective rendering parameter value(s) to be computed for each set of rendering parameter values and the respective rendering parameter value(s) computed for each set of rendering parameter values for said given frame index is the largest.

8. The computer-implemented method according to one of the preceding claims, wherein operation a) further includes receiving (200) a respective execution time for each interpolation function, wherein operation b) includes computing (220) a rendering time for each of the N timecodes based on the received execution times, and wherein the non-linear rendering order is such that a frame index associated with a timecode is prioritized all the more for implementing operations c) and d) as the rendering time of said timecode is low.

9. The computer-implemented method according to one of the preceding claims, further comprising a graphical operation (800) including displaying (801) a video preview player on a graphical user interface, and, upon receipt (810) of a preview request through the graphical user interface, an operation e) of playing back (820), by said video preview player, the already rendered frames in the increasing order of the frame indices.

10. The computer-implemented method according to claim 9, wherein said graphical operation includes displaying (802) a timeline on the graphical user interface, and wherein operation d) includes adding to the timeline a marker corresponding to the frame according to the increasing order of the frame indices and whose selection through the graphical user interface results in the display of said frame in the video preview player.

11. The computer-implemented method according to claim 9 or 10, wherein said graphical operation (800) includes displaying (803) thumbnails on the graphical user interface, and wherein operation d) includes showing the frame in one of the thumbnails according to the increasing order of the frame indices and whose selection through the graphical user interface results in the display of said frame in the video preview player.

12. A computer program comprising instructions for implementing the computer-implemented method according to one of the preceding claims when said instructions are executed by at least one processor (15).

13. A computer-readable storage medium (13) having stored thereon the computer program of claim 12.

14. A device (1) for previewing a 3D scene video having predetermined duration and frame rate comprising:
• an input unit (3) configured to receive at least one set of rendering parameter values of said 3D scene video, each rendering parameter value being associated with a respective timestamp, two rendering parameter values having consecutive timestamps forming a pair of rendering parameter values to which a respective interpolation function is associated;
• a preparation unit (5) configured to determine a number N of timecodes, where N is an integer based on the product of the predetermined duration and frame rate received by the input unit (3), and to associate a respective frame index with each of the N timecodes, with the increasing order of the frame indices matching the chronological order of the N timecodes;
• a computing unit (7) configured, upon receipt of a timecode, to compute a respective rendering parameter value for each set of rendering parameter values received by the input unit (3) by using the interpolation function associated with the pair of rendering parameter values whose respective timestamps bound the received timecode;
• a rendering unit (9) configured to render a frame based on each rendering parameter value computed by the computing unit (7); and
• a processor (15) configured to determine a non-linear rendering order of the frame indices that is not increasing for at least some of the N timecodes, and to iteratively provide the computing unit (7) with each of the N timecodes in the non-linear rendering order.

15. The device (1) of claim 14, further comprising a display unit (11) configured to display a video preview player on a graphical user interface, and, upon receipt of a preview request through the graphical user interface, to cause said video preview player to play back the already rendered frames in the increasing order of the frame indices.
